# FASCICULE DE BREVET EUROPEEN

(11) **EP 3 040 210 B1**
(45) Date de publication et mention de la délivrance du brevet: **07.04.2021**
(21) Numéro de dépôt: 15202815.5
(22) Date de dépôt: 28.12.2015
(51) Int. Cl.: B60B 27/02, B60B 37/10, B60B 5/02, B65F 1/14

(54) **DISPOSITIF DE FIXATION D'UNE ROUE COMPRENANT UNE LAME**
BEFESTIGUNGSVORRICHTUNG EINES RADS, DAS EINE KLINGE UMFASST
DEVICE FOR ATTACHING A WHEEL COMPRISING A BLADE

(30) Priorité: 31.12.2014 FR 1463485
(43) Date de publication de la demande: 06.07.2016
(73) Titulaire: SULO France, 69800 Saint-Priest (FR)
(72) Inventeur: Ollier, Fabrice, 01700 Miribel (FR)
(74) Mandataire: Remy, Vincent Noel Paul

(56) Documents cités:
- EP-A1- 2 327 569
- DE-U1- 8 507 012
- DE-U1- 9 307 291

## Description

La présente invention concerne un dispositif de fixation d'une roue pour bac à déchets.

Afin de fixer une roue à un arbre de rotation d'un bac à déchet, on peut utiliser une roue à moyeu, moyeu à l'intérieur duquel l'arbre de rotation est engagé et maintenu fixe en translation par un dispositif de fixation.

Concernant ces dispositifs, ils comprennent généralement un ressort et une tige appelée « bonhomme ». Le bonhomme est enfoncé dans un alésage radial de la jante, s'étendant du moyeu jusqu'à une ouverture vers l'extérieur de la jante. Le bonhomme est placé de sorte qu'une extrémité dépasse dans le moyeu en direction de l'arbre de rotation. Cette extrémité pénètre dans une gorge de révolution formée sur l'arbre de la roue. C'est cela qui réalise le maintien en translation de l'arbre dans la roue. Afin de maintenir le bonhomme en place dans la gorge, on place un ressort derrière lui, dans l'alésage. Enfin, on réalise un sertissage du ressort, de manière à ce que ce dernier ne puisse s'extraire de l'alésage. Ainsi, le ressort maintient en place le bonhomme dans la gorge de l'arbre, et l'arbre est donc maintenu fixe en translation par rapport à la roue.

L'inconvénient de ce dispositif est d'abord son coût de mise en place. En effet, il comprend deux éléments, un ressort et un bonhomme en acier, qu'il faut engager dans l'alésage de la roue. L'opération nécessite également un sertissage du ressort après la mise en place des deux éléments.

De façon corollaire, le procédé de mise en place est long.

On connait du document EP 2 327 569 une roue comprenant un élément d'un seul tenant présentant dans l'alésage un ressort à spires non jointives et dans la gorge du moyeu, dans la continuité, un ressort à spires jointives formant butée. Cet élément permettant à lui seul de remplacer le ressort et le bonhomme. Cependant, la partie aux spires non jointives doit être fixée dans le bandage de la roue, ce qui complique le montage de cet élément.

On connaît également du document DE 93 07 291 une roue comprenant un élément d'un seul tenant présentant dans l'alésage un ressort et dans la gorge du moyeu, dans la continuité, une partie formant butée. Cependant, la partie aux spires doit être fixée à une plaque de pression, elle-même devant être fixée à l'alésage de la roue, ce qui là encore complique et ralentit le montage de l'élément.

L'invention a pour but de remédier à ces inconvénients en fournissant un dispositif ainsi qu'un procédé de fixation rapide et peu coûteux.

On prévoit à cet effet, selon l'invention, un dispositif de fixation d'une roue à moyeu pour bac à déchets sur un arbre de rotation muni d'une gorge de révolution, par engagement dans ladite gorge d'une butée dépassant radialement du moyeu de la roue, comprenant une lame présentant au moins deux parties à savoir une première partie conformée en ressort à allongement longitudinal et présentant au niveau d'une extrémité libre au moins une forme en pointe apte à s'ancrer dans un alésage de la roue, et une deuxième partie conformée de manière à former la butée apte à se loger dans ladite gorge.

Ainsi, au lieu de deux éléments, le dispositif en comprend un seul : une lame. Celleci fait office à la fois de ressort et de bonhomme. Il est donc plus facile de mettre en place le dispositif au sein de la roue. De plus, on crée une ou des pointes au niveau de l'extrémité libre de ressort, pointes qui s'ancrent dans l'alésage et permettent de fixer la lame. Le dispositif est fixé grâce à sa forme. On n'a donc pas besoin de réaliser un sertissage de la partie conformée en ressort après la mise en place du dispositif. Le procédé de mise en place est donc encore accéléré et le coût diminué.

Avantageusement, la deuxième partie présente une forme en volume.

Ainsi, elle forme une butée qui peut s'engager dans la gorge de l'arbre de façon à le bloquer en translation par rapport à la roue.

Avantageusement, la deuxième partie présente une forme semi-tubulaire au niveau d'une extrémité libre.

Cette forme peut être réalisée simplement en une seule frappe lors d'un moulage, et peut être située dans la gorge de l'arbre avec n'importe quelle orientation.

De préférence, la conformation de la deuxième partie comprend un enroulement de la lame sur elle-même.

Ainsi, on augmente la résistance de la partie de la lame faisant office de bonhomme.

On prévoit également, selon l'invention, un procédé de fabrication d'un dispositif de fixation d'une roue à moyeu pour bac à déchets, dans lequel on effectue l'étape suivante :
- insertion d'une lame entre un poinçon et une matrice de façon à former un ressort dans une première partie de la lame et une forme en volume au niveau d'une extrémité libre dans une deuxième partie de la lame.

Ainsi, le procédé est rapide car il consiste à insérer une seule pièce entre le poinçon et la matrice d'un outil à suivre et à déclencher les frappes pour réaliser le formage de la pièce. Il coûte également moins cher que l'approvisionnement d'un bonhomme et un ressort.

Le formage peut consister en un pliage, un emboutissage ou une combinaison des deux.

Avantageusement, on effectue en outre l'étape suivante :
- découpe d'une extrémité libre de la lame au niveau du ressort de manière à former au moins une forme en pointe apte à s'ancrer dans un alésage de la roue.

La découpe a lieu avantageusement en même temps que le formage, grâce à une forme appropriée du poinçon et de la matrice pour créer un cisaillement.

Ainsi, il est plus rapide et moins coûteux de former une pointe à partir du ressort plutôt que de réaliser un sertissage pour empêcher le ressort de s'extraire de l'alésage.

L'invention sera mieux comprise à la lecture des figures annexées, qui sont fournies à titre d'exemples et ne présentent aucun caractère limitatif, dans lesquelles :
- la figure 1 représente, en coupe médiane, une jante et un moyeu d'une roue comprenant un dispositif de fixation selon l'art antérieur ;
- les figures 2 à 4 représentent un dispositif selon un premier mode de réalisation de l'invention, respectivement en perspective, en vue de dessus et en vue de côté ;
- la figure 5 représente un dispositif selon un deuxième mode de réalisation de l'invention ;

- les figures 6 à 11 représentent des variantes du dispositif de la figure 5 ;
- la figure 13 représente la partie conformée en ressort d'un dispositif selon un troisième mode de réalisation ;
- la figure 14 représente une variante de la partie conformée en volume d'un dispositif selon l'invention ; et
- la figure 15 représente une installation apte à mettre en oeuvre un procédé de fabrication selon l'invention.

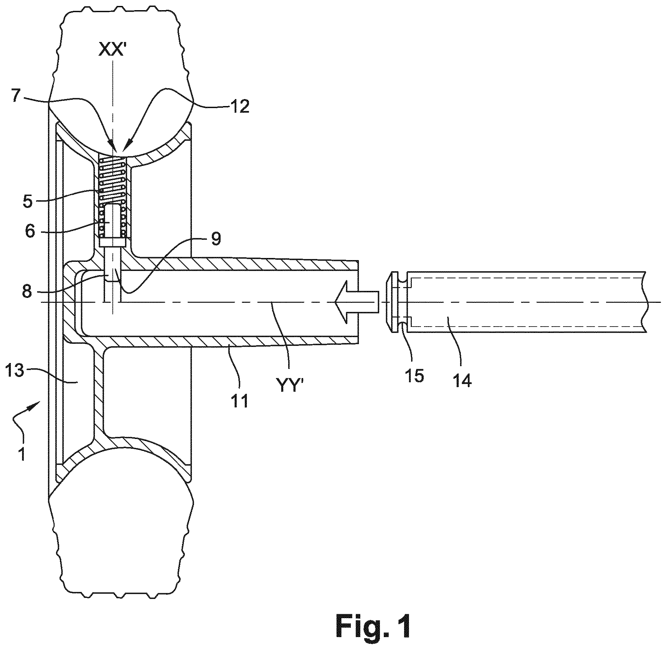

La figure 1 représente une roue 1 de bac à déchet de l'état de la technique, comprenant une jante 13 qui présente un moyeu 11. Le moyeu 11 est un tube s'étendant à partir de la jante 13 de la roue 1 dans une direction comprenant l'axe YY' de rotation de la roue. Dans ce moyen 11 est inséré un arbre de rotation 14, qui comprend une gorge circulaire de révolution 15. Cet arbre est destiné à être fixé à un bac à déchet et à pouvoir être mobile en rotation par rapport au bac à déchet. On fixe l'arbre 14 au moyeu 11 à l'aide d'un dispositif de fixation décrit ci-après.

Le dispositif de fixation de l'art antérieur comprend, en l'espèce, un ressort 5 et une tige, appelée « bonhomme » 6. Le ressort 5 et le bonhomme 6 sont situés dans un alésage radial 7 de la jante 13, de sorte que le ressort supporte le bonhomme dans la suivant la direction de l'axe XX'. Cet alésage 7 s'étend du moyeu 11 par une embouchure 9 jusqu'à l'extérieur de la jante 13, au niveau d'une embouchure 12. Le ressort 5 est fixé à l'alésage 7 par sertissage au niveau de l'embouchure 12. L'extrémité 8 du bonhomme 6 est de forme arrondie. Elle dépasse de l'alésage 7 par l'embouchure 9 opposée à l'embouchure 12 et est donc située à l'intérieur du moyeu 11 de la roue 1. Ainsi, cette extrémité 8 est engagée dans la gorge circulaire 15 de l'arbre 14. Pour mettre en place cette fixation, on procède de la façon suivante :
- On insère l'arbre de rotation 14 dans le moyeu 11.
- On insère le bonhomme 6 dans l'alésage 7 par l'embouchure 12, de sorte que l'extrémité 8 du bonhomme s'engage dans la gorge 15 de l'arbre 14.
- On insère le ressort 15 par l'embouchure 12, de manière à presser le bonhomme contre la gorge 15.

On réalise le sertissage du ressort au sein de l'alésage 7, afin que le dispositif comprenant le ressort 5 et le bonhomme 6 ne puisse s'extraire de l'alésage.

Ce procédé est long est relativement coûteux, car il faut disposer d'un ressort et d'un bonhomme, et réaliser une étape de sertissage une fois que les éléments sont mis en place.

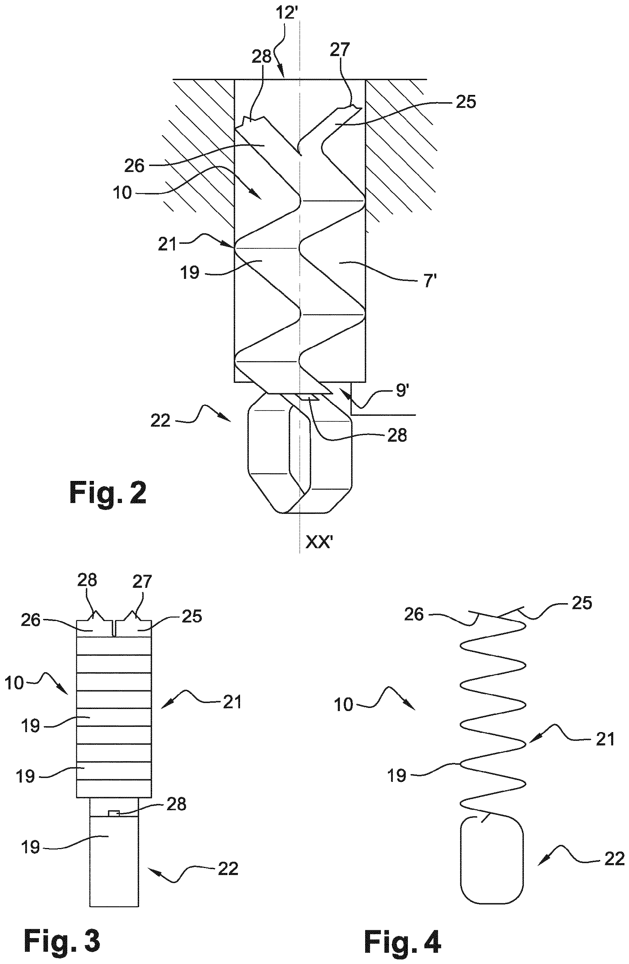

La figure 2 représente un dispositif 10 selon un premier mode de réalisation de l'invention, qui remplace le ressort 5 et le bonhomme 6 de l'art antérieur, et qui évite l'opération de sertissage précitée.

Le dispositif 10 est constitué uniquement d'une lame 19, d'un seul tenant, mais dont on peut distinguer deux parties :
- une première partie 21, dans laquelle la lame 19 comprend plusieurs plis transversaux sur elle-même de sorte qu'elle présente une forme de ressort apte à s'allonger et à se rétracter dans la direction de l'axe XX', et qui présente deux lamelles 25 et 26 au niveau de l'embouchure 12' qui sont ancrées au moyen de formes en pointe respectivement 27 et 28 dans deux points opposés de l'alésage 7', formés par pénétration des pointes 27 et 28 dans la paroi de l'alésage, de sorte que le dispositif 10 ne peut s'extraire de l'alésage 7 par le haut ;
- une deuxième partie 22, située au niveau de l'embouchure 9, dans laquelle la lame est enroulée sur elle-même dans la direction perpendiculaire à l'axe XX' et forme une boucle au niveau d'une embouchure 28.

La première partie 21 fait donc office de ressort tandis que la partie 22 fait office de bonhomme, les deux parties constituant une seule lame 19. C'est donc la partie 22 qui est engagée dans la gorge 15 de l'arbre 14.

La figure 3 est une vue de dessus de la lame 19, tandis que la figure 4 représente une vue de côté. Ces deux figures permettent d'observer les deux parties 21 et 22 et les deux lamelles 25 et 26 du dispositif 10 constitué de la lame 19.

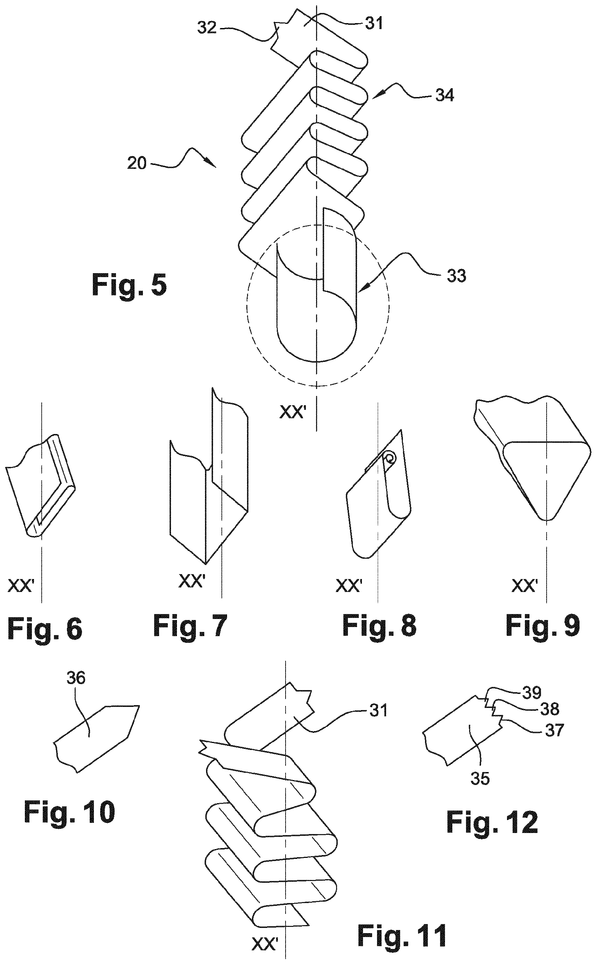

La figure 5 représente un dispositif 20 selon un second mode de réalisation. Il est constitué également d'une seule lame. Cependant, il diffère du mode de réalisation précédent par ses extrémités. En effet, à l'extrémité de sa première partie 34 en forme de ressort, il comprend une seule lamelle 31 qui présente une pointe 32 apte à s'ancrer dans un alésage. Sa deuxième partie 33 présente une forme tubulaire. Cette forme a pour avantage de pourvoir engager le dispositif 20 dans la gorge d'un arbre de rotation dans n'importe quelle orientation angulaire.

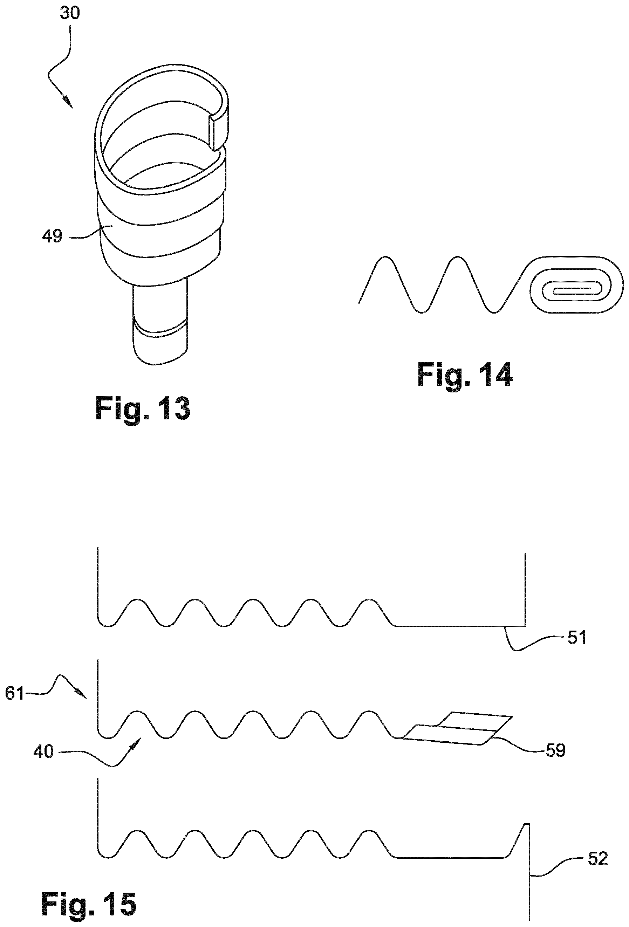

Les figures 6 à 9 représentent différentes possibilités de forme pour la deuxième partie de la lame apte à être engagée dans une gorge. A la figure 6, la lame est repliée deux fois sur elle-même selon l'axe XX'. Le fait de replier la lame sur elle-même la rend plus résistante car elle présente une épaisseur plus importante. Elle peut ainsi supporter plus de contraintes exercées par la partie ressort de la lame ou par l'arbre de rotation. La figure 7 représente une forme de cube ouvert, avec quatre arêtes qui augmentent l'inertie de la lame, la figure 8 une forme repliée sur elle-même une fois dans la direction perpendiculaire à l'axe XX', et la figure 9 une forme en triangle, avec trois arêtes. Ces différentes formes peuvent faciliter le maintien en rotation du dispositif au sein de l'alésage de la roue. On peut également replier plusieurs fois sur elle-même l'extrémité de la lame, comme illustré à la figure 14.

Les figures 10 à 12 représentent différentes formes possibles pour l'extrémité de la première partie 34 du dispositif 20. Ainsi, la lamelle 35 présente trois pointes 37, 38 et 39, tandis que la lamelle 36 se termine en forme de flèche pointue. Tout type de forme concernant cette extrémité fait partie du cadre de l'invention, à partir du moment où elle permet au dispositif de s'ancrer dans un alésage.

Dans un autre mode de réalisation, illustré à la figure 13, montrant uniquement la première partie constituant le ressort sans lamelle de fixation, la forme du ressort est réalisée par un enroulement suivant la direction XX', de sorte que la lame 49 présente une forme de tube dont on aurait tronçonné la surface suivant une hélice.

Dans le cadre de l'invention, la première partie du dispositif peut comprendre toute forme susceptible de se comporter comme un ressort à allongement longitudinal.

On va maintenant décrire un procédé de fabrication d'un dispositif de fixation selon l'invention

La figure 15 représente un poinçon 51 et une matrice 52 d'une presse, qui permettent d'obtenir le dispositif 40 en une seule frappe, à savoir une découpe par cisaillement, un emboutissage et un pliage. Dans une variante non illustrée, la lame est mise en forme par passage à travers un outil à suivre comportant des outils à actions successives. La lame 59 est alors mise en mouvement dans une direction longitudinale, tandis que les outils se referment à des intervalles de temps prédéterminés sur la lame, de façon à la frapper afin de former ses différentes parties. Une fois la dernière frappe réalisée, on obtient le dispositif 40, constitué de la lame 59, présentant une première partie en forme de ressort et une deuxième partie en volume en l'espèce de forme semi-tubulaire, apte à être engagée dans une gorge d'un arbre de rotation. Le procédé est donc rapide et peu coûteux.

Le dispositif 40 est apte à s'ancrer dans un alésage au moyen de ses formes en pointe, dont des exemples ont été décrits précédemment et illustrés aux figures 10 à 12. On obtient alors un dispositif selon l'invention.

L'invention n'est pas limitée aux modes de réalisation présentés et d'autres modes de réalisation apparaîtront clairement à l'homme du métier.

Les dimensions et les formes du ressort notamment peuvent être variables.

La largeur de la partie ressort du dispositif peut être plus importante que la largeur de la deuxième partie du dispositif en volume, ou inversement.

Enfin, il est à noter que ce dispositif peut être enlevé de sorte que le démontage de la roue par rapport à l'arbre est toujours réalisable.

## Revendications

1. Dispositif de fixation (10 ; 20 ; 30 ; 40) d'une roue (1) à moyeu (11) pour bac à déchets sur un arbre de rotation (14) muni d'une gorge (15) de révolution, par engagement dans ladite gorge (15) d'une butée dépassant radialement du moyeu de la roue, comprenant une lame (19 ; 49 ; 59) présentant au moins deux parties (21, 22 ; 34, 33), à savoir une première partie (21 ; 34) conformée en ressort à allongement longitudinal, et une deuxième partie (22 ; 33) conformée de manière à former la butée apte à se loger dans ladite gorge (15), **caractérisé en ce que** la première partie présente au niveau d'une extrémité libre au moins une forme en pointe (27, 28 ; 32 ; 36 ; 37, 38, 39) apte à s'ancrer dans un alésage (7') de la roue.

2. Dispositif (10 ; 20 ; 30 ; 40) selon la revendication précédente, dans lequel la deuxième partie (22 ; 33) présente une forme en volume.

3. Dispositif (10 ; 20 ; 30 ; 40) selon au moins l'une quelconque des revendications précédentes, dans lequel la deuxième partie (33) présente une forme semi-tubulaire au niveau d'une extrémité libre.

4. Dispositif (10 ; 20 ; 30 ; 40) selon au moins l'une quelconque des revendications précédentes, dans lequel la conformation de la deuxième partie (22) comprend un enroulement de la lame sur elle-même.

5. Procédé de fabrication d'un dispositif de fixation (10 ; 20 ; 30 ; 40) d'une roue à moyeu pour bac à déchets, **caractérisé en ce qu'**on effectue l'étape suivante :
- insertion d'une lame (19 ; 49 ; 59) entre un poinçon et une matrice (51, 52) de façon à former un ressort dans une première partie de la lame et une forme en volume au niveau d'une extrémité libre dans une deuxième partie de la lame.

6. Procédé selon la revendication précédente, dans lequel on effectue en outre l'étape suivante :
- découpe d'une extrémité libre de la lame (19 ; 49 ; 59) au niveau du ressort de manière à former au moins une forme en pointe (27, 28 ; 32 ; 36 ; 37, 38, 39) apte à s'ancrer dans un alésage (7') de la roue.

## Patentansprüche

1. Vorrichtung (10; 20; 30; 40) zum Befestigen eines Rades (1) mit einer Nabe (11) für einen Abfalleimer auf einer Drehwelle (14), die mit einer Rotationsnut (15) versehen ist, durch Eingreifen eines radial von der Nabe des Rades vorstehenden Anschlags in die Nut (15), umfassend einen Streifen (19; 49; 59) mit mindestens zwei Teilen (21, 22; 34, 33), und zwar einem ersten Teil (21; 34), der als Feder mit Längserstreckung ausgebildet ist, und einem zweiten Teil (22; 33), der so ausgebildet ist, dass er den Anschlag bildet, der zur Aufnahme in der Nut (15) geeignet ist, **dadurch gekennzeichnet, dass** der erste Teil an einem freien Ende mindestens eine spitze Form (27, 28; 32; 36; 37, 38, 39) aufweist, die in einer Aussparung (7') des Rades verankert werden kann.

2. Vorrichtung (10; 20; 30; 40) nach dem vorhergehenden Anspruch, wobei der zweite Teil (22; 33) eine Volumen aufweisende Form aufweist.

3. Vorrichtung (10; 20; 30; 40) nach mindestens einem der vorhergehenden Ansprüche, wobei der zweite Teil (33) an einem freien Ende eine halbrohrförmige Form aufweist.

4. Vorrichtung (10; 20; 30; 40) nach mindestens einem der vorhergehenden Ansprüche, wobei die Formgebung des zweiten Teils (22) eine Wicklung des Streifens auf sich selbst umfasst.

5. Verfahren zum Herstellen einer Vorrichtung (10; 20; 30; 40) zum Befestigen eines Nabenrades für einen Abfalleimer, **dadurch gekennzeichnet, dass** der folgende Schritt durchgeführt wird:
- Einlegen eines Streifens (19; 49; 59) zwischen einem Stempel und einer Matrize (51, 52), um in einem ersten Teil des Streifens eine Feder und an einem freien Ende in einem zweiten Teil des Streifens eine Volumen aufweisende Form auszubilden.

6. Verfahren nach dem vorhergehenden Anspruch, wobei außerdem der folgende Schritt durchgeführt wird:
- Zuschneiden eines freien Endes des Streifens (19; 49; 59) auf der Höhe der Feder, um mindestens eine spitze Form (27, 28; 32; 36; 37, 38, 39) zu bilden, die zum Verankern in einer Aussparung (7') des Rades geeignet ist.

## Claims

1. Device (10; 20; 30; 40) for securing a wheel (1) with a hub (11) for a waste bin on a rotational shaft (14) provided with a rotationally symmetrical groove (15), by engagement, in said groove (15), of a stop projecting radially from the hub of the wheel, comprising a blade (19; 49; 59) having at least two parts (21, 22; 34, 33), namely a first part (21; 34) shaped as a spring with a longitudinal elongation, and a second part (22; 33) shaped so as to form the stop suitable for being housed in said groove (15), **characterized in that** the first part has, at a free end, at least one pointed shape (27, 28; 32; 36; 37, 38, 39) suitable for being anchored in a bore (7') of the wheel.

2. Device (10; 20; 30; 40) according to the preceding claim, wherein the second part (22; 33) has a volume shape.

3. Device (10; 20; 30; 40) according to at least one of the preceding claims, wherein the second part (33) has a semi-tubular shape at a free end.

4. Device (10; 20; 30; 40) according to at least one of the preceding claims, wherein the shaping of the second part (22) comprises winding the blade on itself.

5. Method for producing a device (10; 20; 30; 40) for securing a hub wheel for a waste bin, **characterized in that** the following step is carried out:
- inserting a blade (19; 49; 59) between a punch and a die (51, 52) so as to form a spring in a first part of the blade and a volume shape at a free end in a second part of the blade.

6. Method according to the preceding claim, wherein the following step is also carried out:
- cutting a free end of the blade (19; 49; 59) at the spring so as to form at least one pointed shape (27, 28; 32; 36; 37, 38, 39) suitable for anchoring in a bore (7') of the wheel.
